# FASCICULE DE BREVET EUROPEEN

(11) **EP 1 993 936 B1**
(45) Date de publication et mention de la délivrance du brevet: **18.08.2021**
(21) Numéro de dépôt: 07731093.6
(22) Date de dépôt: 06.03.2007
(51) Int. Cl.: E03B 11/02, B60R 15/02, E03D 5/00, E03B 11/00

(54) **SYSTEME DE DISTRIBUTION ET DE RECUPERATION DE LIQUIDES ET DISPOSITIF LE COMPORTANT**
SYSTEM ZUR ABGABE UND RÜCKGEWINNUNG VON FLÜSSIGKEITEN UND DIESES UMFASSENDE VORRICHTUNG
SYSTEM FOR DISPENSING AND RECOVERING LIQUIDS AND DEVICE COMPRISING SAME

(30) Priorité: 07.03.2006 FR 0650788
(43) Date de publication de la demande: 26.11.2008
(73) Titulaire: Maximilien, Richard, 41200 Romorantin Lanthenay (FR); Legrand, Marc, 41200 Romorantin Lanthenay (FR)
(72) Inventeur: Maximilien, Richard, 41200 Romorantin Lanthenay (FR); Legrand, Marc, 41200 Romorantin Lanthenay (FR)
(74) Mandataire: Santarelli
(86) Numéro de dépôt international: PCT/FR2007/000394
(87) Numéro de publication internationale: WO 2007/101938

(56) Documents cités:
- DE-U1- 8 716 514
- FR-A- 2 807 745
- US-A- 3 931 907
- None

## Description

L'invention concerne de manière générale les systèmes de distribution et de récupération de liquides dans un container rigide.

On connaît du document FR 2 807 745 un dispositif hydraulique comportant un système de ce genre disposé dans un container. Le système comporte un réservoir supérieur de réception des eaux usées et un réservoir inférieur dans lequel est stockée de l'eau propre. Les deux réservoirs sont expansibles et compressibles et sont séparés par un disque qui comprime le réservoir inférieur contre les parois du container par l'intermédiaire d'un ressort disposé sur le pourtour du réservoir supérieur, notamment pour distribuer l'eau sous pression. A vide, le réservoir supérieur présente un volume utile permettant de recevoir des eaux usées avant que le réservoir inférieur commence à être vidé. A mesure que le réservoir inférieur se vide, le volume occupé par celui-ci diminue tandis que le volume utile du réservoir supérieur augmente.

Le document US 3,131,907 décrit un système semblable, mais où le disque de séparation et le ressort sont remplacés par une paroi de séparation élastique disposée en biais dans le réservoir.

L'invention vise à fournir un système de distribution et de récupération de liquides du même genre mais présentant une structure simplifiée et une amélioration en matière de volume de stockage de liquide tout étant particulièrement pratique et commode à utiliser et à fabriquer.

A cet effet, l'invention propose un système de distribution et de récupération de liquides adapté à être disposé dans un container rigide, comportant un réservoir de distribution de liquide à utiliser et un réservoir de récupération de liquide après usage, chaque dit réservoir comportant une enveloppe et un orifice de passage de liquide caractérisé en ce que chaque dite enveloppe comporte une première paroi et une seconde paroi, similaires, comportant chacune une surface externe et un rebord périphérique, lesdites parois d'une dite enveloppe étant raccordées l'une à l'autre par leur dit rebord périphérique, chaque dite enveloppe étant adaptée à présenter une configuration contractée dans laquelle lesdites parois sont étendues l'une à proximité de l'autre et ladite surface externe de ladite deuxième paroi est convexe tandis que ladite surface externe de ladite première paroi est concave, et une configuration gonflée dans laquelle le contact entre les deux dites parois est limité auxdits rebords périphériques et lesdites surfaces externes de chaque dite paroi sont convexes, au moins une dite enveloppe étant adaptée, dans sa configuration gonflée, à s'imbriquer dans l'autre dite enveloppe dans sa configuration contractée, les deux dites premières parois étant en contact l'une avec l'autre.

Lorsque le réservoir de distribution se vide et que le réservoir de récupération se remplit, chaque première paroi voit la convexité de sa surface externe s'inverser. L'évolution de la configuration des enveloppes correspond à cette inversion de convexité qui se produit sous le seul effet de l'augmentation du volume de liquide. Au cours de cette évolution, les premières parois restent en contact mutuel.

Cette évolution se fait sans que le volume total occupé par le système ne varie. Et le volume d'un réservoir en configuration gonflée correspond globalement au volume total puisque qu'un tel réservoir vient s'imbriquer dans l'autre réservoir qui, dans sa configuration contractée, occupe un volume négligeable par rapport au volume total du système.

Selon des caractéristiques de mise en œuvre particulièrement simples et commodes tant à la fabrication qu'à l'utilisation :
- lesdites enveloppes présentent des dimensions similaires et chaque dite enveloppe est adaptée, dans sa configuration gonflée, à s'imbriquer dans l'autre dite enveloppe dans sa configuration contractée, les deux dites premières parois étant en contact l'une avec l'autre ; et éventuellement
- chaque dite première paroi et chaque dite deuxième paroi comportent deux panneaux rectangulaires et deux panneaux latéraux adaptés à ce que dans leur configuration gonflée chaque dite enveloppe est parallélépipédique ; et éventuellement
- chaque dite première paroi présente une épaisseur moindre dans ses coins formés à la jonction de deux dits panneaux rectangulaires et d'un dit panneau transversal.

La variation d'épaisseur des panneaux procure une souplesse qui facilite le changement de convexité de la première paroi tout en permettant aux réservoirs de présenter une rigidité d'ensemble qui contribue à rendre le système résistant au cours du temps dans son utilisation dans le container ou lors des vidanges et remplissage à l'extérieur du container.

Selon des caractéristiques de mise en œuvre particulièrement simples et commodes tant à la fabrication qu'à l'utilisation :
- chaque dit réservoir comporte un bouchon adapté à fermer un dit orifice respectif, lesdits bouchons ayant des diamètres distincts ; et éventuellement
- le système comporte un tuyau de distribution dont l'une des extrémités est située dans ledit réservoir de distribution et des moyens de pompage du liquide à utiliser adaptés à évacuer ce liquide hors dudit réservoir de distribution par ledit tuyau ; et éventuellement
- lesdits moyens de pompage comportent une pompe disposée à l'intérieur dudit réservoir de distribution et un câble d'alimentation électrique de ladite pompe adapté à être relié à des moyens d'alimentation électrique, ledit bouchon comportant au moins un trou pour le passage dudit câble et dudit tuyau ; ou
- lesdits moyens de pompage comportent une pompe disposée à l'extérieur dudit réservoir de distribution et un câble d'alimentation électrique de ladite pompe adapté à être relié à des moyens d'alimentation électrique, ledit tuyau étant relié à ladite pompe et ledit bouchon comportant un trou pour le passage dudit tuyau.

L'invention propose en outre un dispositif de distribution et de récupération de liquides, caractérisé en ce qu'il comporte un container rigide et un système tel que précédemment exposé, disposé dans ledit container.

L'évolution de la configuration des réservoirs résulte de l'interaction des réservoirs eux-mêmes avec le contact mutuel des premières parois. Ainsi le système est simplement disposé dans le container ou retiré du container en raccordant ou en déconnectant, selon le cas, des moyens de distribution et de récupération.

Selon des caractéristiques de mise en œuvre particulièrement simples et commodes tant à la fabrication qu'à l'utilisation :
- ledit container est parallélépipédique ; et/ou
- ledit container comporte un évier et une bonde située dans le fond dudit évier, ledit réservoir de récupération comportant un bouchon adapté à fermer ledit orifice du réservoir de récupération, ledit système comportant en outre des moyens de récupération comportant un tuyau dont une première extrémité est raccordée à ladite bonde et dont une seconde extrémité est raccordée audit bouchon dudit réservoir de récupération ; et/ou
- le dispositif comporte une paroi amovible d'accès audit système.

Les caractéristiques et avantages de l'invention ressortiront de la description qui suit, donnée à titre d'exemple préféré, mais non limitatif, en référence aux dessins annexés, sur lesquels :
- la figure 1 est une vue en perspective d'un dispositif selon l'invention ;
- la figure 2 est une vue en perspective d'un système selon l'invention avec le tuyau de distribution raccordé au réservoir de distribution dans sa configuration gonflée et le tuyau de récupération raccordé au réservoir de récupération dans la configuration contractée ;
- la figure 3 est une vue en perspective du réservoir de distribution de la figure 2, dans sa configuration gonflée, avec un arrachement partiel laissant apparaître la pompe située dans le volume intérieur ;
- la figure 4 est une vue similaire à celle de la figure 3, sans l'arrachement partiel, le réservoir de distribution étant dans un état partiellement rempli ;
- la figure 5 est une vue similaire à celle de la figure 3, le réservoir étant dans sa configuration contractée ;
- la figure 6 est une vue en perspective du réservoir de récupération dans sa configuration gonflée ;
- la figure 7 est une vue similaire à celle de la figure 6, le réservoir étant dans sa configuration contractée ; et
- la figure 8 est une vue d'un système selon une variante de réalisation, similaire à celle de la figure 2, le réservoir de distribution étant dans sa configuration contractée et le réservoir de récupération dans sa configuration gonflée, le réservoir de distribution étant représenté avec la pompe disposée à l'extérieur.

Le dispositif 1 comporte un container 2 en matière plastique et présente une forme générale parallélépipédique. Il présente quatre parois latérales dont l'une comporte une portion 3 amovible, ainsi qu'une paroi supérieure 4 présentant un renfoncement qui forme un évier 5.

La portion 3 est rectangulaire et s'étend lorsqu'elle est montée dans le container 2 sur toute la largeur de la paroi latérale à laquelle elle appartient. Elle s'étend, en hauteur, du bas du container 2, c'est-à-dire du côté opposé à la paroi 4, jusqu'à une extrémité située à l'écart de la paroi 4.

La portion 3 comporte une découpe 6 sur son bord en vis-à-vis de la paroi 4. Cette découpe 6 forme une poignée utile pour se saisir de la portion 3 afin de la désolidariser du reste du container 2 ou pour la repositionner.

La portion 3 comporte également des moyens d'encliquetage (non représentés) coopérant avec des moyens d'encliquetage correspondants positionnés sur le reste du container 2 permettant à cette portion 3 d'être amovible.

Selon des variantes du mode de réalisation non représentées, la portion 3 comportent des moyens de fixation à aimant ou des charnières pour sa fixation amovible au reste du container.

L'évier 5 présente une forme de L s'étendant le long de deux bords de la paroi 4. L'évier 5 délimite une portion rectangulaire 9 de paroi 4 globalement dans le même plan que les bords communs de cette paroi 4 avec les parois latérales.

La paroi 4 comporte deux orifices 10, 11.

L'orifice 10 est situé dans un coin de la paroi 4 qui est également un coin de la portion rectangulaire 9. Cet orifice 10 est destiné à permettre le passage de l'intérieur du container 2 à l'extérieur de celui-ci d'un des moyens de distribution de liquide.

L'orifice 11 est situé dans le fond de l'évier 5. Il s'agit d'un orifice circulaire servant de bonde d'évier.

La paroi 4 est moulée d'une pièce avec la partie extrême des quatre parois latérales, cette partie extrême s'étendant de la paroi 4 vers le bas du container 2 jusqu'au niveau de la portion 3. La hauteur de cette partie extrême correspond à la profondeur de l'évier 5. La partie comportant la paroi 4 et la partie comportant les trois parois latérales sont fixées ensemble par une liaison mécanique adaptée.

A l'intérieur du container 2 se trouve le système de distribution et de récupération de liquides 15. Celui-ci comporte un réservoir de distribution de liquide 16 et un réservoir de récupération de liquide 17.

On décrit maintenant le réservoir 16.

Le réservoir 16 comporte une enveloppe 18 en matière plastique conforme aux normes en vigueur pour des réservoirs d'eau potable.

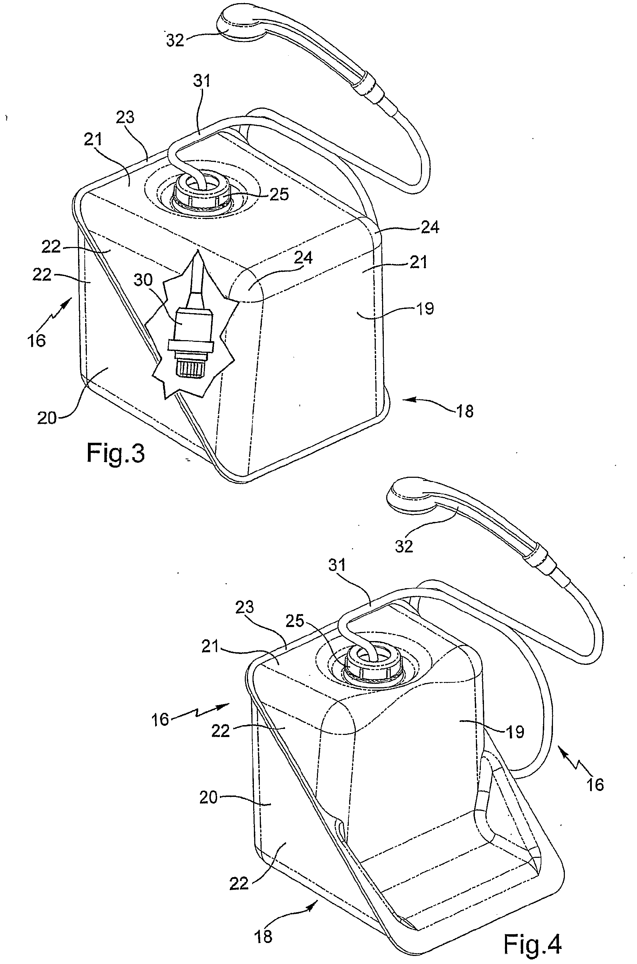

Cette enveloppe 18 comporte deux parois 19 et 20. La paroi 19 comporte deux panneaux rectangulaires 21 et deux panneaux latéraux triangulaires 22. Les panneaux 21 sont disposés, dans la configuration gonflée représentée sur la figure 3, transversalement l'un par rapport à l'autre tandis que chaque panneau 22 s'étend transversalement à la fois à chaque panneau 21.

La paroi 19 présente globalement une forme de cube coupé en deux suivant un plan passant par deux arêtes opposées et par le centre de ce cube.

La paroi 19 ne comporte pas d'arête franche entre les deux panneaux 21 ni entre un panneau 22 et un panneau 21, les zones de jonction entre les différents panneaux étant arrondies. Dans ces zones de jonction et principalement dans les coins 24 formés à la jonction de deux panneaux 21 et d'un panneau 22, l'épaisseur des panneaux est plus fine que dans le reste du panneau de sorte que la paroi 19 est plus souple dans ces zones.

Au niveau du bord libre qui s'étend selon un contour fermé le long des quatre panneaux 21, 22, la paroi 19 présente un rebord 23. Le rebord 23 s'étend le long d'un contour rectangulaire présentant des coins arrondis.

La paroi 19 présente sur un panneau 21 un orifice de passage circulaire. Le plan comportant le contour de cet orifice est légèrement décalé par rapport au plan principal du panneau 21, la zone de jonction entre le contour de l'orifice et le reste du panneau 21 étant globalement tronconique.

La paroi 20 est similaire à la paroi 19 et comporte des panneaux 21, 22 ainsi qu'un rebord 23. En revanche, la paroi 20 ne comporte pas d'orifice circulaire.

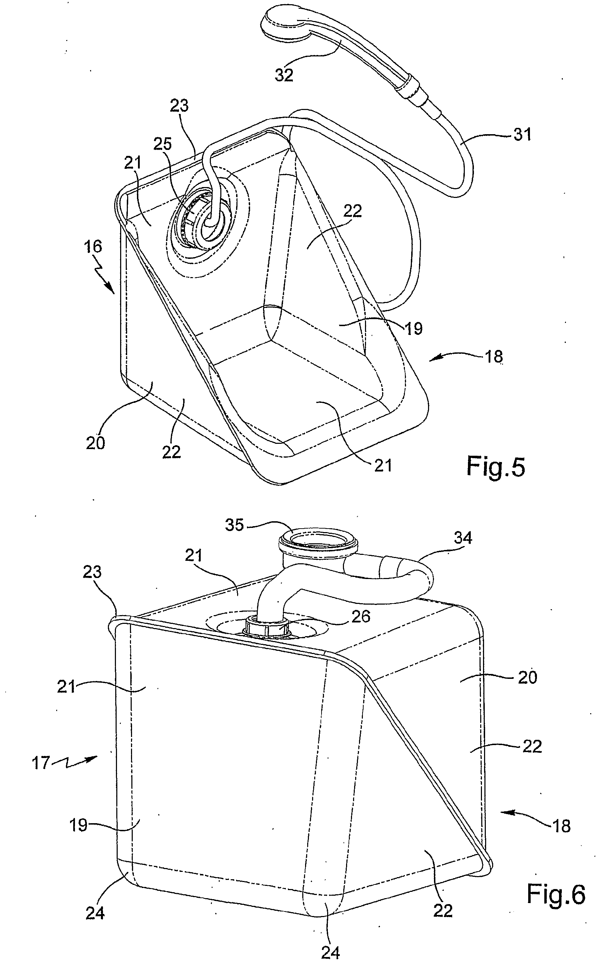

Les deux parois 19, 20 sont reliées au niveau de leur rebord 23. La description qui précède pour l'enveloppe 18 du réservoir 16 vaut également pour l'enveloppe 18 du réservoir de récupération 17 (figure 6) qui comporte deux parois 19 et 20, chaque paroi 19, 20 comportant deux panneaux 21, deux panneaux 22 et un rebord périphérique 23 par lesquels les deux parois 19, 20 sont reliées. En revanche, c'est la paroi 20 de l'enveloppe du réservoir de récupération 17 qui présente un orifice de passage dans un panneau 21.

Le réservoir 16 comporte en outre un bouchon 25 en matière plastique, vissable sur un col à surface filetée raccordé à l'orifice de passage. Le bouchon 25 comporte en outre un trou pour le passage d'un tuyau.

Le réservoir 17 comporte également un bouchon 26 en matière plastique, vissable, qui coopère avec un col à surface filetée raccordée à l'orifice de passage. Le bouchon 26 est également percé pour le raccord d'un tuyau.

Le bouchon 26 présente un diamètre inférieur à celui du bouchon 25.

Le système 15 comporte en outre des moyens de distribution : une pompe 30 et un tuyau de distribution 31.

La pompe 30 est disposée à l'intérieur du réservoir 16 et elle est raccordée à une première extrémité du tuyau 31 (figure 3). La pompe 30 a ici un débit de pompage de 10 litres par minute, une consommation électrique de 3 A et une puissance électrique de 36 W.

Le tuyau 31 traverse le bouchon 25 par le trou prévu à cet effet. Des moyens d'étanchéité sont également prévus au niveau du bouchon 25. Le tuyau 31 présente une certaine longueur en dehors du réservoir 16 et à sa deuxième extrémité, celui-ci est raccordé à un pommeau de distribution 32.

Le pommeau 32 est adapté pour pouvoir passer au travers de l'orifice 10 de la paroi 4 de sorte que lorsque le réservoir 16 est situé dans le container 2, le pommeau 32 est situé à l'extérieur du container 2 au-dessus de l'évier 5.

La pompe 30 est raccordée par un câble non représenté à des moyens d'alimentation électrique. Le câble sort du réservoir 16 également par le bouchon 25.

Le réservoir 17 comporte des moyens de récupération de liquides. Il s'agit d'un tuyau de récupération 34 dont une extrémité est reliée au bouchon 26 lui-même raccordé au col de l'orifice de passage. A son autre extrémité, le tuyau 34 comporte une bague 35 qui est adaptée à coopérer avec la bonde de l'évier 5.

L'enveloppe 18 de chaque réservoir 16, 17 présente une configuration gonflée et une configuration contractée et plus généralement on considère qu'un réservoir 16, 17 est dans une configuration gonflée ou contractée lorsque son enveloppe 18 est dans la configuration gonflée ou contractée respective.

Lorsque les réservoirs 16, 17 sont dans leur configuration gonflée (figures 3, 6), les parois 19 et 20 sont écartées l'une de l'autre, de telle sorte que le réservoir a une forme parallélépipédique. Cette forme correspond à un état rempli du réservoir.

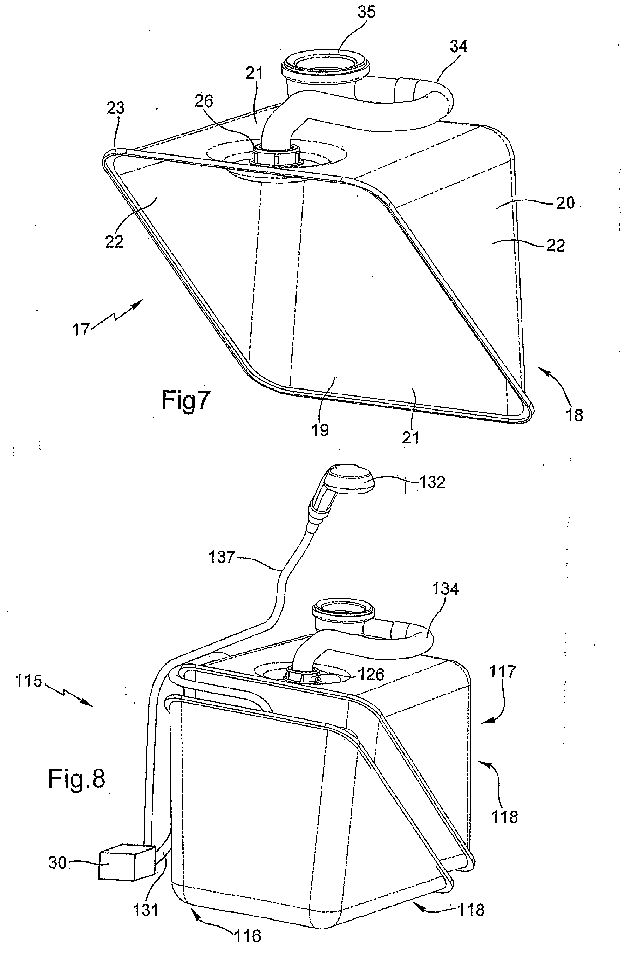

Dans leur configuration contractée (figures 5, 7), les réservoirs 16 et 17 présentent un volume négligeable. La paroi 19 s'étend contre la paroi 20, c'est-à-dire que le panneau 21 de la paroi 19 et le panneau 21 de la paroi 20 séparés par le bord périphérique 23 se retrouvent l'un contre l'autre. De même, le panneau 22 de la paroi 19 et le panneau 22 de la paroi 20 se retrouvent l'un contre l'autre de sorte que la paroi 19 est repliée dans la paroi 20.

Dans cette configuration, les réservoirs 16, 17 présentent chacun une paroi 20 présentant une surface externe convexe et une paroi 19 présentant une surface externe concave, la forme de la paroi 19 épousant la forme de la paroi 20.

Du fait de leur forme similaire, lorsque le réservoir 16 est en configuration gonflée et le réservoir 17 en configuration contractée, ce réservoir 17 peut s'imbriquer dans le réservoir 16, c'est-à-dire que le réservoir 17 vient recouvrir la surface externe de la paroi 19 du réservoir 16.

Dans le cas où le réservoir 16 est dans sa configuration contractée et que le réservoir 17 est dans sa configuration gonflée, le réservoir 17 s'imbrique dans le réservoir 16, c'est-à-dire que le réservoir 16 recouvre la paroi 19 du réservoir 17, la surface externe de la paroi 19 du réservoir 16 étant en contact avec la surface externe de la paroi 19 du réservoir 17.

Le réservoir 16, tout comme le réservoir 17, peut prendre toutes les configurations intermédiaires entre la configuration gonflée et la configuration contractée. Dans une configuration intermédiaire possible (figure 4), un panneau 21 de la paroi 19 est partiellement en contact avec le panneau 21 adjacent de la paroi 20, tout comme le sont les panneaux 22 de la paroi 19 avec les panneaux adjacents 22 de la paroi 20.

Les réservoirs 16, 17 ont chacun un volume d'environ vingt litres. Le container 2 a ici un volume d'environ cinquante litres.

On décrit maintenant l'utilisation du système 15 et plus généralement du dispositif 1.

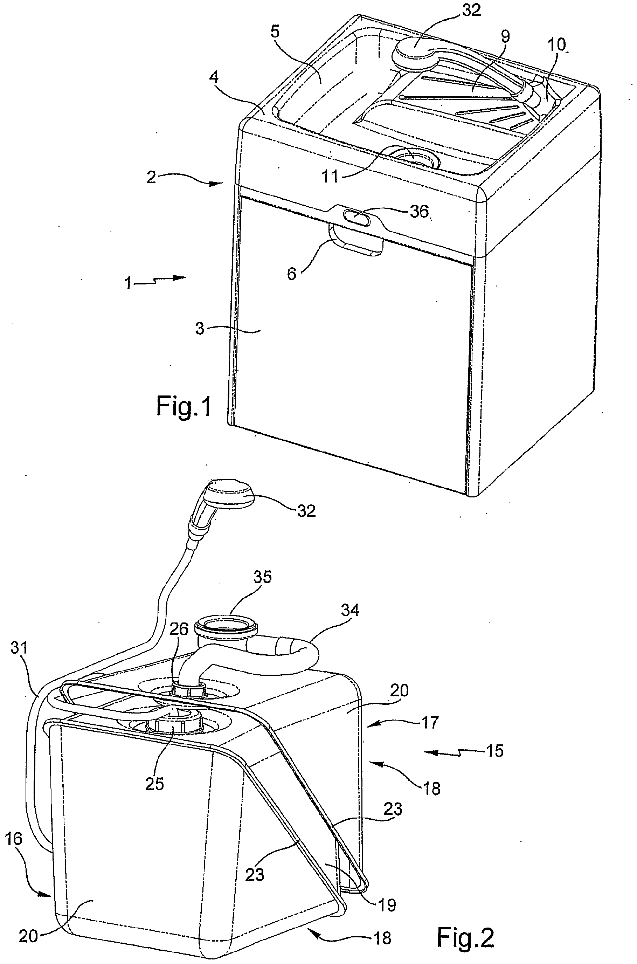

Le dispositif 1, que l'on peut utiliser notamment dans des véhicules de loisir, est pourvu du système 15 placé dans le container 2 avec le réservoir 16 plein et le réservoir 17 vide (figure 2). Le réservoir 16 est ici un réservoir d'eau propre et le réservoir 17 est un réservoir d'eau usée.

Quand on souhaite faire couler de l'eau par le pommeau 32, on enclenche un interrupteur 36 positionné au-dessus de la découpe 6. L'interrupteur 36 est raccordé par des moyens non représentés à la pompe 30. En actionnant l'interrupteur 36, on déclenche la pompe 30 de sorte que l'eau propre remonte le tuyau 31 jusqu'à couler par le pommeau 32.

Si l'eau s'écoule dans l'évier 5, elle s'évacue à travers la bonde puis par le tuyau 34 jusqu'à arriver dans le réservoir 17.

Avec l'arrivée de l'eau usée dans le réservoir 17, celui-ci passe de sa configuration contractée à une configuration intermédiaire, c'est-à-dire que progressivement le réservoir 17 gonfle sous l'afflux d'eau usée. Dans le même temps, le réservoir 16 qui était à l'origine dans sa configuration gonflée se vide de liquide.

Avec le réservoir 16 qui se vide et le réservoir 17 qui se remplit, la paroi 19 du réservoir 16 commence à s'affaisser vers la paroi 20, tandis que la paroi 19 du réservoir 17 commence à s'écarter de la paroi 20 du réservoir 17.

En revanche, la paroi 20 du réservoir 16 et la paroi 20 du réservoir 17 ne se déforment pas et restent en place. Au fur et à mesure du remplissage du réservoir 17, le réservoir 16 se contracte jusqu'à ce que son enveloppe 18 soit dans sa configuration contractée tandis que l'enveloppe du réservoir 17 gonfle et atteint sa configuration gonflée sous l'effet du volume d'eau usée accueillie.

La surface externe de la paroi 20 du réservoir 16 convexe à l'origine est alors concave tandis que la surface externe de la paroi 20 du réservoir 17 concave à l'origine est alors convexe.

Le volume d'eau usée stockée dans le réservoir 17 correspond ici au volume d'eau propre stockée à l'origine dans le réservoir 16.

Lorsque le réservoir 17 est plein et que le réservoir 16 est vide, c'est dans le réservoir 16 que s'imbrique le réservoir 17.

Lorsque le réservoir 16 est vide, il n'est plus possible d'obtenir de l'eau. Les utilisateurs sont donc informés qu'ils doivent remplir à nouveau le réservoir d'eau propre 16 et vider le réservoir d'eau usée 17.

Pour ce faire, on désolidarise la paroi 3 du container 2. On dévisse les bouchons 25, 26 et on sort la pompe 30 du réservoir 16. On peut alors retirer le système 15 hors du container 2 pour vidanger le réservoir 17 et pour remplir d'eau propre le réservoir 16, les tuyaux 31, 34 restant avec le dispositif 1.

Afin de faciliter le transport des réservoirs 16, 17, des poignées (non représentées) peuvent être prévues sur les parois des réservoirs 16, 17, ces poignées étant moulées d'une seule pièce avec la paroi à laquelle elles appartiennent.

Lorsque l'eau propre est de l'eau potable, on peut également faire couler l'eau dans le but de la consommer et, de manière plus générale, on peut utiliser l'eau extraite du réservoir 16 sans que l'intégralité de celle-ci se retrouve en tant qu'eau usée dans le réservoir 17. Dans ce cas, le volume d'eau récupérée dans le réservoir 17 est inférieur au volume d'eau maximal pouvant être accueilli dans ce réservoir. Même si l'eau usée n'occupe pas la totalité du volume utile du réservoir 17 en configuration gonflée, l'effort qu'exerce la quantité d'eau usée sur les parois 19 est suffisant pour les pousser vers la paroi 20 du réservoir 16.

Cet effort est d'ailleurs très inférieur à celui que nécessiterait l'écrasement d'un réservoir dont aucune paroi ne serait adaptée à se retourner pour venir en contact avec l'autre paroi. Dans un tel cas, deux parois principales à l'écart seraient rapprochées par écrasement d'au moins une paroi latérale. Les deux parois principales ne pourraient venir en contact l'une de l'autre du fait de la hauteur occupée par la ou les parois latérales froissées. On obtiendrait un volume à vide résultant beaucoup plus important que celui obtenu dans la configuration contractée.

L'évolution de la configuration des réservoirs 16, 17 est liée à l'état de remplissage du réservoir adjacent.

Lorsque l'on replace les réservoirs 16, 17 dans le container 2, il n'est pas possible d'utiliser le réservoir de récupération 17 en lieu et place du réservoir de distribution 16. En effet, les bouchons 25, 26 ayant des diamètres différents, on ne peut pas raccorder le tuyau de distribution 31 au réservoir 17 et on ne peut pas raccorder le tuyau 34 au réservoir 16. D'autre part, on ne peut pas positionner la pompe 30 à l'intérieur du réservoir 17 du fait du trop petit diamètre de l'orifice de passage.

On va maintenant décrire une variante du mode de réalisation illustrée sur la figure 8. Pour cette variante, on a conservé pour des éléments similaires les mêmes références que précédemment, augmentées du chiffre 100.

La pompe 130 est disposée à l'extérieur du réservoir 116. Un premier tuyau 131 comporte une extrémité à l'intérieur du réservoir 16 et une seconde extrémité raccordée à la pompe 130 qui permet de pomper le liquide hors du réservoir 116. Un deuxième tuyau 137 part de la pompe 130 et rejoint le pommeau 132.

Selon une autre variante, le dispositif 1 présente une forme cylindrique et les parois 19, 20 présentent également des formes cylindriques dans leur configuration gonflée, ces parois 19, 20 présentant une épaisseur moindre le long des zones de jonction entre les panneaux qui les composent.

Selon encore une autre variante, les bouchons présentent un même diamètre et il est prévu des moyens de détrompage visuels avec les bouchons et les filetages d'une couleur déterminée pour chaque bouchon respectif.

Selon un autre mode de réalisation, on peut prévoir que le système 15 comporte un ou plusieurs réservoirs supplémentaires, par exemple un réservoir de savon de petit volume par rapport au volume des réservoirs 16 et 17. Un tuyau de distribution est également prévu pour ce ou ces réservoirs supplémentaires avec des moyens de pompage, par exemple mécaniques.

Selon un autre mode de réalisation non représenté, les parois 20 sont rigides et indéformables, et l'épaisseur des panneaux 21, 22 des parois 20 est constante.

Selon un autre mode de réalisation, le container est embarqué sur une machine de nettoyage sur roues avec un réservoir d'eau savonneuse et un réservoir de récupération d'eau sale avec le réservoir d'eau savonneuse relié à un tuyau se prolongeant par un manche et une tête nettoyeuse. Le manche comporte des moyens d'aspiration pour récupérer l'eau usée remontant dans un tuyau dans ledit manche, le tuyau étant raccordée au réservoir d'eau usée.

On a décrit le dispositif comme un module embarqué de véhicule de loisir pour des applications terrestres. Selon d'autres modes de réalisation, le dispositif est embarqué sur un véhicule de transport aérien ou maritime.

## Revendications

1. Système de distribution et de récupération de liquides adapté à être disposé dans un container (2) rigide, comportant un réservoir (16) de distribution de liquide à utiliser et un réservoir (17) de récupération de liquide après usage, chaque dit réservoir (16, 17) comportant une enveloppe (18) et un orifice de passage de liquide, **caractérisé en ce que** chaque dite enveloppe (18) comporte une première paroi (19) et une seconde paroi (20), similaires, comportant chacune une surface externe et un rebord périphérique (23), lesdites parois (19, 20) d'une dite enveloppe (18) étant raccordées l'une à l'autre par leur dit rebord périphérique (23), chaque dite enveloppe (18) étant adaptée à présenter une configuration contractée dans laquelle lesdites parois (19, 20) sont étendues l'une à proximité de l'autre et ladite surface externe de ladite deuxième paroi (20) est convexe tandis que ladite surface externe de ladite première paroi (19) est concave, et une configuration gonflée dans laquelle le contact entre les deux dites parois (19, 20) est limité auxdits rebords périphériques (23) et lesdites surfaces externes de chaque dite paroi (19, 20) sont convexes, au moins une dite enveloppe (18) étant adaptée, dans sa configuration gonflée, à s'imbriquer dans l'autre dite enveloppe (18) dans sa configuration contractée, les deux dites premières parois (19) étant en contact l'une avec l'autre.

2. Système selon la revendication 1, **caractérisé en ce que** lesdites enveloppes (18) présentent des dimensions similaires et **en ce que** chaque dite enveloppe (18) est adaptée, dans sa configuration gonflée, à s'imbriquer dans l'autre dite enveloppe (18) dans sa configuration contractée, les deux dites premières parois (19) étant en contact l'une avec l'autre.

3. Système selon la revendication 2, **caractérisé en ce que** chaque dite première paroi (19) et chaque dite deuxième paroi (20) comportent deux panneaux rectangulaires (21) et deux panneaux latéraux (22) adaptés à ce que dans leur configuration gonflée chaque dite enveloppe (18) est parallélépipédique.

4. Système selon la revendication 3, **caractérisé en ce que** chaque dite première paroi (19) présente une épaisseur moindre dans ses coins (24) formés à la jonction de deux dits panneaux rectangulaires (21) et d'un dit panneau transversal (22).

5. Système selon l'une quelconque des revendications précédentes, **caractérisé en ce que** chaque dit réservoir (16, 17) comporte un bouchon (25, 26) adapté à fermer un dit orifice respectif, lesdits bouchons (25, 26) ayant des diamètres distincts.

6. Système selon la revendication 5, **caractérisé en ce qu'**il comporte un tuyau de distribution (31) dont l'une des extrémités est située dans ledit réservoir de distribution (16) et des moyens de pompage (30) du liquide à utiliser adaptés à évacuer ce liquide hors dudit réservoir de distribution (16) par ledit tuyau (31).

7. Système selon la revendication 6, **caractérisé en ce que** lesdits moyens de pompage comportent une pompe (30) disposée à l'intérieur dudit réservoir de distribution (16) et un câble d'alimentation électrique de ladite pompe (30) adapté à être relié à des moyens d'alimentation électrique, ledit bouchon (25) comportant au moins un trou pour le passage dudit câble et dudit tuyau (31).

8. Système selon la revendication 6, **caractérisé en ce que** lesdits moyens de pompage comportent une pompe (130) disposée à l'extérieur dudit réservoir de distribution (116) et un câble d'alimentation électrique de ladite pompe (130) adapté à être relié à des moyens d'alimentation électrique, ledit tuyau (131) étant relié à ladite pompe et ledit bouchon (125) comportant un trou pour le passage dudit tuyau (131).

9. Dispositif de distribution et de récupération de liquides, **caractérisé en ce qu'**il comporte un container rigide (2) et un système (15) selon l'une quelconque des revendications précédentes disposé dans ledit container (2).

10. Dispositif selon la revendication 9, **caractérisé en ce que** ledit container (2) est parallélépipédique.

11. Dispositif selon l'une quelconque des revendications 9 ou 10, **caractérisé en ce que** ledit container (2) comporte un évier (5) et une bonde (11) située dans le fond dudit évier (5), ledit réservoir de récupération (17) comportant un bouchon (26) adapté à fermer ledit orifice du réservoir de récupération (17), ledit système comportant en outre des moyens de récupération comportant un tuyau (34) dont une première extrémité est raccordée à ladite bonde (11) et dont une seconde extrémité est raccordée audit bouchon (26) dudit réservoir de récupération (17).

12. Dispositif selon l'une quelconque des revendications 9 à 11, **caractérisé en ce qu'**il comporte une paroi amovible (3) d'accès audit système (15).

## Patentansprüche

1. System zur Abgabe und Rückgewinnung von Flüssigkeiten, das dazu ausgelegt ist, in einem starren Behälter (2) angeordnet zu werden, enthaltend ein Gefäß (16) zur Abgabe von zu verwendender Flüssigkeit und ein Gefäß (17) zur Rückgewinnung von Flüssigkeit nach der Verwendung, wobei jedes Gefäß (16, 17) eine Umhüllung (18) und eine Flüssigkeitsdurchtrittsöffnung aufweist, **dadurch gekennzeichnet, dass** jede Umhüllung (18) eine erste Wand (19) und eine zweite Wand (20) enthält, die ähnlich ausgeführt sind und jeweils eine Außenfläche und einen Umfangsrand (23) aufweisen, wobei die Wände (19, 20) einer Umhüllung (18) mit ihrem Umfangsrand (23) aneinander anschließen, wobei jede Umhüllung (18) dazu ausgelegt ist, eine zusammengezogene Stellung, in der sich die Wände (19, 20) nahe beieinanderliegend erstrecken und die Außenfläche der zweiten Wand (20) konvex verläuft, während die Außenfläche der ersten Wand (19) konkav verläuft, und eine ausgedehnte Stellung aufzuweisen, in der der Kontakt zwischen den beiden Wänden (19, 20) auf die Umfangsränder (23) begrenzt ist und die Außenflächen jeder Wand (19, 20) konvex verlaufen, wobei mindestens eine Umhüllung (18) dazu ausgelegt ist, in ihrer ausgedehnten Stellung in die andere Umhüllung (18) in ihrer zusammengezogenen Stellung einzugreifen, wobei die beiden ersten Wände (19) miteinander in Kontakt stehen.

2. System nach Anspruch 1, **dadurch gekennzeichnet, dass** die Umhüllungen (18) ähnliche Abmessungen aufweisen und dass jede Umhüllung (18) dazu ausgelegt ist, in ihrer ausgedehnten Stellung in die andere Umhüllung (18) in ihrer zusammengezogenen Stellung einzugreifen, wobei die beiden ersten Wände (19) miteinander in Kontakt stehen.

3. System nach Anspruch 2, **dadurch gekennzeichnet, dass** jede erste Wand (19) und jede zweite Wand (20) zwei rechteckige Platten (21) und zwei Seitenplatten (22) enthalten, die dazu ausgelegt sind, dass jede Umhüllung (18) in ihrer ausgedehnten Stellung quaderförmig ist.

4. System nach Anspruch 3, **dadurch gekennzeichnet, dass** jede erste Wand (19) an ihren Ecken (24), die an der Verbindung von zwei rechteckigen Platten (21) und einer Querplatte (22) bestehen, eine geringere Dicke aufweist.

5. System nach einem der vorhergehenden Ansprüche, **dadurch gekennzeichnet, dass** jedes Gefäß (16, 17) einen Stopfen (25, 26) aufweist, der dazu ausgelegt ist, eine jeweilige Öffnung zu verschließen, wobei die Stopfen (25, 26) unterschiedliche Durchmesser haben.

6. System nach Anspruch 5, **dadurch gekennzeichnet, dass** es einen Abgabeschlauch (31) enthält, der sich mit einem Ende in dem Abgabegefäß (16) befindet, sowie Pumpmittel (30) für die zu verwendende Flüssigkeit, die dazu ausgelegt sind, diese Flüssigkeit durch den Schlauch (31) aus dem Abgabegefäß (16) auszuleiten.

7. System nach Anspruch 6, **dadurch gekennzeichnet, dass** die Pumpmittel eine Pumpe (30), die im Inneren des Abgabegefäßes (16) angeordnet ist, und ein Stromversorgungskabel für die Pumpe (30) enthalten, das dazu ausgelegt ist, mit Stromversorgungsmitteln verbunden zu werden, wobei der Stopfen (25) mindestens eine Lochung für den Durchtritt des Kabels und des Schlauchs (31) aufweist.

8. System nach Anspruch 6, **dadurch gekennzeichnet, dass** die Pumpmittel eine Pumpe (130), die außerhalb des Abgabegefäßes (116) angeordnet ist, und ein Stromversorgungskabel für die Pumpe (130) enthalten, das dazu ausgelegt ist, mit Stromversorgungsmitteln verbunden zu werden, wobei der Schlauch (131) mit der Pumpe verbunden ist und der Stopfen (125) eine Lochung für den Durchtritt des Schlauchs (131) aufweist.

9. Vorrichtung zur Abgabe und Rückgewinnung von Flüssigkeiten, **dadurch gekennzeichnet, dass** sie einen starren Behälter (2) und ein in diesem Behälter (2) angeordnetes System (15) nach einem der vorhergehenden Ansprüche enthält.

10. Vorrichtung nach Anspruch 9, **dadurch gekennzeichnet, dass** der Behälter (2) quaderförmig ist.

11. Vorrichtung nach einem der Ansprüche 9 oder 10, **dadurch gekennzeichnet, dass** der Behälter (2) eine Spüle (5) und ein im Boden der Spüle (5) angeordnetes Spundloch (11) aufweist, wobei das Rückgewinnungsgefäß (17) einen Stopfen (26) enthält, der dazu ausgelegt ist, die Öffnung des Rückgewinnungsgefäßes (17) zu verschließen, wobei das System ferner Rückgewinnungsmittel enthält, die einen Schlauch (34) aufweisen, der mit einem ersten Ende an das Spundloch (11) und mit einem zweite Ende an den Stopfen (26) des Rückgewinnungsgefäßes (17) angeschlossen ist.

12. Vorrichtung nach einem der Ansprüche 9 bis 11, **dadurch gekennzeichnet, dass** sie eine abnehmbare Wand (3) für den Zugang zu dem System (15) aufweist.

## Claims

1. System for dispensing and recovering liquids adapted to be disposed in a rigid container (2), including a tank (16) for dispensing liquid to be used and a tank (17) for recovering liquid after use, each of said tanks (16, 17) including an envelope (18) and an orifice through which liquid passes, **characterized in that** each of said envelopes (18) includes a first wall (19) and a second wall (20) which are similar and each of which includes an external surface and a peripheral rim (23), said walls (19, 20) of one of said envelopes (18) being connected to each other by said peripheral rim (23), each of said envelopes (18) being adapted to have a contracted configuration in which said walls (19, 20) are close to each other and said external surface of said second wall (20) is convex while said external surface of said first wall (19) is concave, and an expanded configuration in which contact between said two walls (19, 20) is limited to said peripheral rims (23) and said external surfaces of each of said walls (19, 20) are convex, at least one of said envelopes (18) being adapted, in its expanded configuration, to be nested in the other of said envelopes (18) in its contracted configuration, said two first walls (19) being in contact with each other.

2. System according to claim 1, **characterized in that** said envelopes (18) have similar dimensions and each of said envelopes (18) is adapted, in its expanded configuration, to be nested in the other of said envelopes (18) in its contracted configuration, said two first walls (19) being in contact with each other.

3. System according to claim 2, **characterized in that** each of said first walls (19) and each of said second walls (20) includes two rectangular panels (21) and two lateral panels (22) adapted so that in their expanded configuration each of said envelopes (18) is parallelepipedal.

4. System according to claim 3, **characterized in that** each of said first walls (19) is thinner in its corners (24) formed at the junction of two of said rectangular panels (21) and one of said transverse panels (22).

5. System according to any one of the preceding claims, **characterized in that** each of said tanks (16, 17) includes a cap (25, 26) adapted to close a respective one of said orifices, said caps (25, 26) having different diameters.

6. System according to claim 5, **characterized in that** it includes a dispensing hose (31) one end of which is situated in said dispensing tank (16) and pumping means (3) for the liquid to be used adapted to evacuate that liquid from said dispensing tank (16) via said hose (31).

7. System according to claim 6, **characterized in that** said pumping means include a pump (30) disposed inside said dispensing tank (16) and an electrical power supply cable of said pump (30) adapted to be connected to electrical power supply means, said cap (25) including at least one hole for said cable and said hose (31) to pass through.

8. System according to claim 6, **characterized in that** said pumping means include a pump (130) disposed outside said dispensing tank (116) and an electrical power supply cable of said pump (130) adapted to be connected to electrical power supply means, said hose (131) being connected to said pump and said cap (125) including a hole for said hose (131) to pass through.

9. Device for dispensing and recovering liquids, **characterized in that** it includes a rigid container (2) and a system (15) according to any one of the preceding claims disposed in said container (2).

10. Device according to claim 9, **characterized in that** said container (2) is parallelepipedal.

11. Device according to either of claims 9 or 10, **characterized in that** said container (2) includes a sink (5) and a plughole (11) situated in the bottom of said sink (5), said recovery tank (17) including a cap (26) adapted to close said orifice of the recovery tank (17), said system further including recovery means including a hose (34) a first end of which is connected to said plughole (11) and a second end of which is connected to said cap (26) of said recovery tank (17).

12. Device according to any one of claims 9 to 11, **characterized in that** it includes a removable wall (3) for access to said system (15).
